# EUROPEAN PATENT SPECIFICATION

(11) **EP 1 526 065 B1**
(45) Date of publication and mention of the grant of the patent: **03.05.2006**
(21) Application number: 03024434.7
(22) Date of filing: 23.10.2003
(51) Int. Cl.: B62K 21/18

(54) **Mounting of handlebar stem on steering tube**
Lenkervorbaumontage auf Steuerkopf
Montage de potence de guidon sur tube de direction

(43) Date of publication of application: 27.04.2005
(73) Proprietor: Chou, Chen-Chang, Taichung Hsien (TW)
(72) Inventor: Chou, Chen-Chang, Taichung Hsien (TW)
(74) Representative: Viering, Jentschura & Partner

(56) References cited:
- US-A- 5 303 611
- US-A- 5 588 336
- PATENT ABSTRACTS OF JAPAN vol. 1995, no. 08, 29 September 1995 (1995-09-29) -& JP 07 112689 A (MATSUSHITA ELECTRIC IND CO LTD), 2 May 1995 (1995-05-02)

## Description

The present invention relates to an apparatus for mounting a handlebar stem on a steering tube according to the preamble portion of claim 1. Such an apparatus is known from US-A-5 588 336.

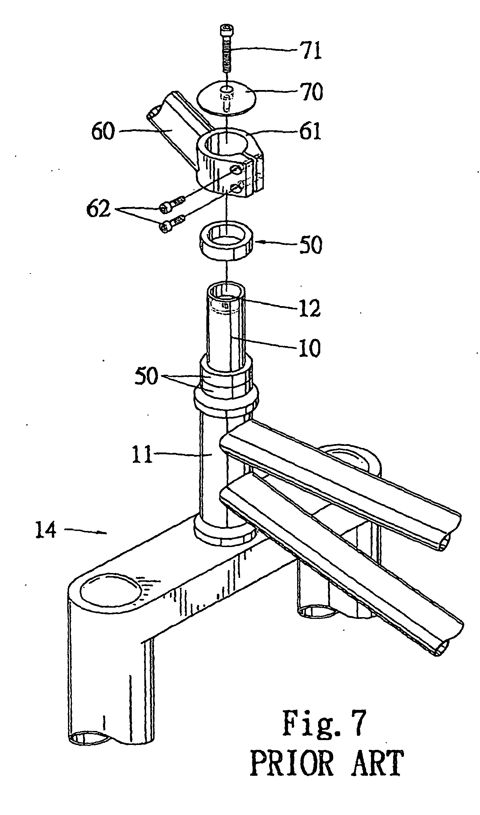

Figure 7 shows a conventional apparatus for mounting a handlebar stem 60 on a steering tube 10. The steering tube 10 is an element of a front fork 14 of a bicycle. The steering tube 10 is inserted through a head tube 11 of the bicycle. Several collars 50 are put around the steering tube 10. The number of the collars 50 is determined based on the position of the handlebar stem 60 on the steering tube 10. The handlebar stem 60 includes a compression connector 61 formed at an end thereof. The compression connector 61 is put around the steering tube 10 and on the uppermost one of the collars 50. A cap 70 is put on the compression connector 61. Through the cap 70, a threaded bolt 71 is driven into a disc 12 secured to the internal side of the steering tube 10 so as to retain the vertical position of the handlebar stem 60 on the steering tube 10. Two threaded bolts 62 are used to cause the compression connector 61 to hold on to the steering tube 10 for retaining the angular position of the handlebar stem 60 on the steering tube 10. However, since the compression connector 61 and the steering tube 10 are both made of metal, the friction between the compression connector 61 and the steering tube 10 is inadequate to hold the compression connector 61 in a proper annular position around the steering tube 10.

US Patent No. 5588336 discloses a conventional apparatus for mounting a handlebar stem 12 on a steering tube 10. The steering tube 10 is inserted through a head tube 30 of a bicycle. A friction sleeve 20 is put around the steering tube 10. The handlebar stem 12 includes a compression connector 14 formed at an end thereof. The compression connector 14 is put around the friction sleeve 20 and on the head tube 30. A cap 18 is put on the compression connector 14. Through the cap 18, a threaded bolt 19 is driven into a threaded hole 102 of a disc secured to the internal side of the steering tube 10 so as to retain the vertical position of the handlebar stem 12 on the steering tube 10. Two threaded bolts are used to cause the compression connector 14 to hold on to the steering tube 10 through the friction sleeve 22 for retaining the angular position of the handlebar stem 12 on the steering tube 10. The friction sleeve 22 is used to increase friction. However, since the internal side of the compression connector 14 and the external side of the friction sleeve 20 are both smooth, the friction between the compression connector 14 and the friction sleeve 20 is still inadequate to hold the compression connector 14 in a proper annular position around the friction sleeve 20.

The present invention is therefore intended to obviate or at least alleviate the problems encountered in prior art.

It is the primary objective of the present invention to provide an apparatus for retaining a handlebar stem in an angular position on a steering tube.

According to the present invention, an apparatus is provided for retaining a handlebar stem in an angular position on a steering tube. The apparatus includes a friction sleeve and a compression connector. The friction sleeve is put around the steering tube. The friction sleeve includes a ridge extending vertically on the external side thereof. The compression connector is formed on the handlebar stem and put around the friction sleeve. The compression connector includes a groove extending vertically in the internal side thereof for receiving the ridge. A ferrule is put around the friction sleeve thereby causing the friction sleeve to hold tightly onto the steering tube.

Other objects, advantages and features of embodiments of the invention will become more apparent from the following detailed description in conjunction with the attached drawings.

The present invention will be described via detailed illustration of embodiments referring to the drawings.
Figure 1 is a perspective view of an apparatus for mounting a handlebar stem on a steering tube according to a first embodiment of the present invention.
Figure 2 is an exploded view of the apparatus of Figure 1.
Figure 3 is a cross-sectional view of the apparatus of Figure 1.
Figure 4 is another cross-sectional view of the apparatus of Figure 1.
Figure 5 is an exploded view of an apparatus for mounting a handlebar stem on a steering tube according to a second embodiment of the present invention.
Figure 6 is a cross-sectional view of the apparatus of Figure 5.
Figure 7 is an exploded view of a conventional apparatus for mounting a handlebar stem on a steering tube.

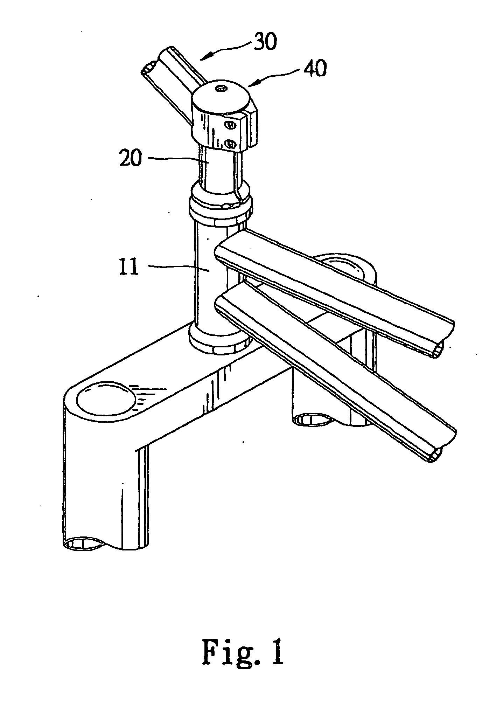

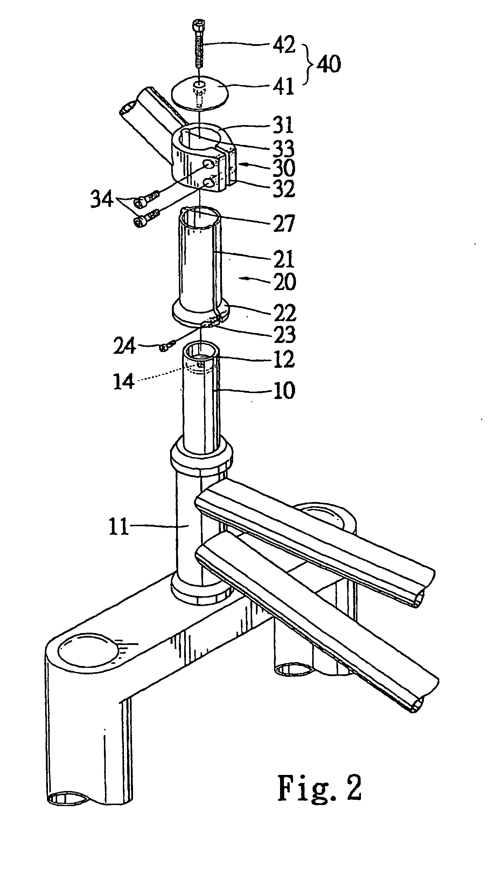

Figures 1 and 2 show an apparatus for mounting a handlebar stem 30 on a steering tube 10 according to a first embodiment of the present invention.

The steering tube 10 is inserted through a head tube 11 of a bicycle. A friction sleeve 20 is put around the steering tube 10. The handlebar stem 30 includes a compression connector 31 formed at an end thereof. The compression connector 31 is put around the friction sleeve 20 and on the head tube 11.

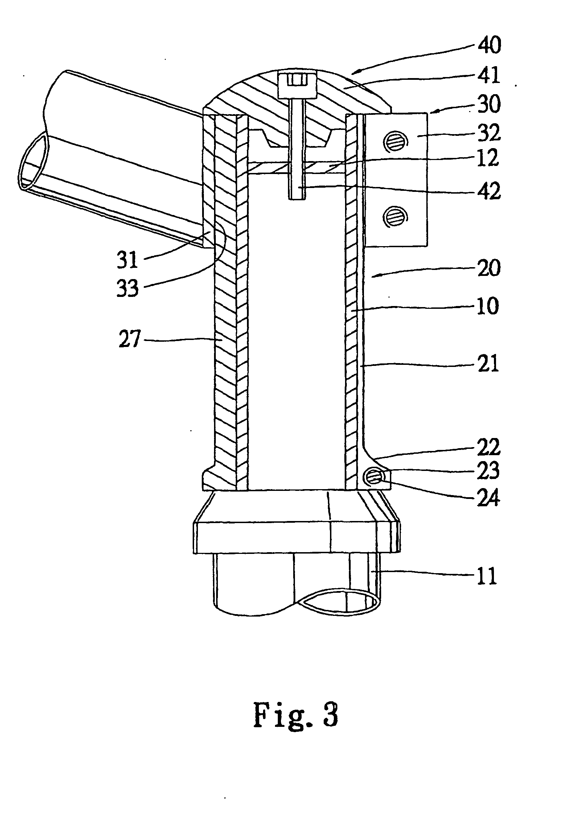

A cap 41 is put on the compression connector 31. Referring to Figures 1 through 3, through the cap 41, a threaded bolt 42 is driven into a threaded hole 14 of a disc 12 secured to the internal side of the steering tube 10. Thus, the vertical position of the handlebar stem 30 on the steering tube 10 is retained. The cap 41 and the threaded bolt 42 make a vertical position retainer 40.

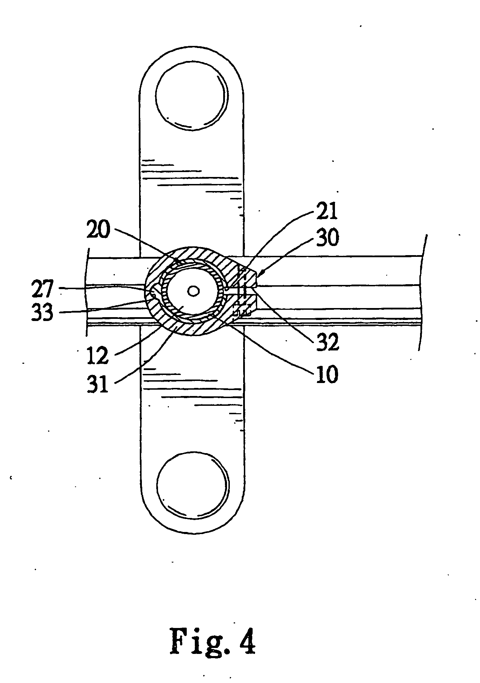

Referring to Figures 1, 2 and 4, two threaded bolts 34 are used to cause the compression connector 31 to hold on to the steering tube 10 through the friction sleeve 20 for retaining the angular position of the handlebar stem 30 on the steering tube 10. The friction sleeve 20 is used to increase friction.

The compression connector 31 is C-shaped when observed in a top view, i.e., it includes a vertical slit 32. The compression connector 31 includes a groove 33 extending vertically in the internal side thereof.

The friction sleeve 20 is C-shaped when observed in a top view, i.e., it includes a vertical slit 21. The friction sleeve 20 includes a ridge 27 extending vertically in the external side thereof

When assembled, the ridge 27 is put in the groove 33. Thus, the friction between the compression connector 31 and the friction sleeve 20 is further increased. The friction is adequate to hold the compression connector 31 in a proper annular position around the friction sleeve 20.

A ferrule 22 is formed on the external side of the friction sleeve 20. The ferrule 22 includes two prongs each defining a threaded hole 23. A threaded bolt 24 is driven into the threaded holes 23 so as to cause the ferrule 22 to hold tightly onto the steering tube 10.

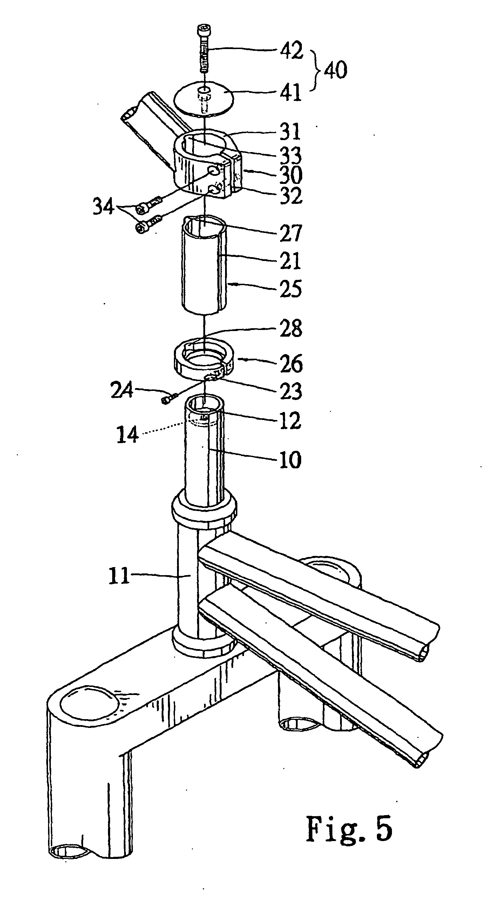

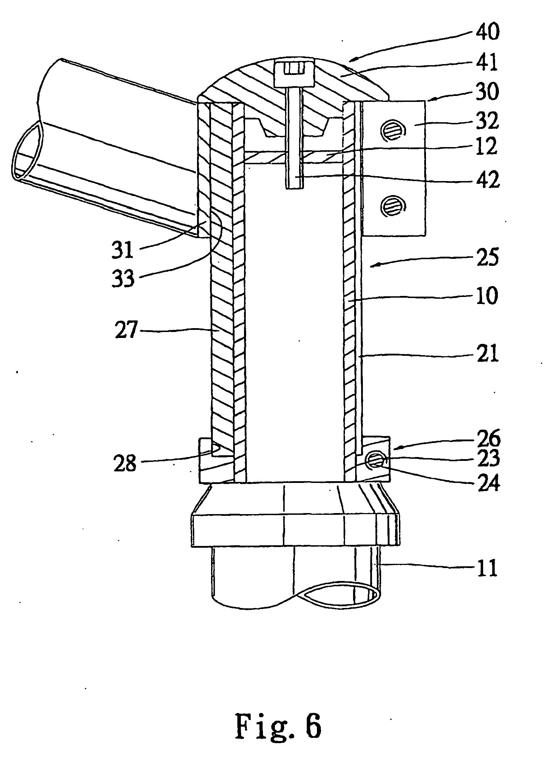

Figures 5 and 6 show an apparatus for mounting the handlebar stem 30 on the steering tube 10 according to a second embodiment of the present invention. The second embodiment is identical to the first embodiment except for including a sleeve 25 and a ferrule 26 that is made separate from the friction sleeve 25 instead of the friction sleeve 20 and the ferrule 22 that is formed on the friction sleeve 20. The ferrule 26 includes a recess 28 defined in the internal side thereof for receiving the ridge 27.

The present invention has been described via detailed illustration of two embodiments. Those skilled in the art can derive variations from the embodiments without departing from the scope of the present invention. Therefore, the embodiments shall not limit the scope of the present invention defined in the claims.

## Claims

1. An apparatus for mounting a handlebar stem (30) on a steering tube (10), the apparatus comprising a friction sleeve (20; 25) put around the steering tube (10), and a compression connector (31) formed on the handlebar stem (30) and put around the friction sleeve (20; 25) **characterized by**
a ridge (27) extending vertically on the external side of the friction sleeve (20; 25),
a groove (33) extending vertically on the internal side of the compression connector (31) for receiving the ridge (27) and,
a ferrule (22; 26) put around the friction sleeve (20; 25) thereby causing the friction sleeve (20; 25) to hold tightly onto the steering tube (10).

2. The apparatus according to claim 1 including a threaded bolt (24) wherein the ferrule (22; 26) includes two prongs each defining a threaded hole (23) into which the threaded bolt (24) is driven.

3. The apparatus according to claim 1 wherein the ferrule (22) is formed on the external side of the friction sleeve (20).

4. The apparatus according to claim 1 wherein the ferrule (26) is made separate from the friction sleeve (25).

5. The apparatus according to claim 4 wherein the ferrule (26) includes a recess (28) defined in the internal side thereof for receiving the ridge (27).

## Patentansprüche

1. Vorrichtung zur Montage eines Lenkstangenschaftes (30) an einem Lenkrohr (10), wobei die Vorrichtung eine Reibhülse (20; 25), die um das Lenkrohr (10) herum gelegt ist, und einen Druckverbinder (31) aufweist, der an dem Lenkstangenschaft (30) ausgebildet und um die Reibhülse (20; 25) herum gesetzt ist, **gekennzeichnet durch**
eine Rippe (27), die sich vertikal an der Außenseite der Reibhülse (20; 25) erstreckt,
eine Nut (33), die sich vertikal an der Innenseite des Druckverbinders (31) zum Aufnehmen der Rippe (27) erstreckt, und
einen Ringansatz (22; 26), der um die Reibhülse (20; 25) herum gesetzt ist, um **dadurch** zu bewirken, dass die Reibhülse (20; 25) fest an dem Lenkrohr (10) gehalten wird.

2. Vorrichtung nach Anspruch 1, aufweisend einen Gewindebolzen (24), wobei der Ringansatz (22; 26) zwei Zacken aufweist, die jeweils ein Gewindeloch (23) definieren, in welches der Gewindebolzen (24) hinein geschraubt ist.

3. Vorrichtung nach Anspruch 1, wobei der Ringansatz (22) an der Außenseite der Reibhülse (20) ausgebildet ist.

4. Vorrichtung nach Anspruch 1, wobei der Ringansatz (26) separat von der Reibhülse (25) gestaltet ist.

5. Vorrichtung nach Anspruch 4, wobei der Ringansatz (26) eine Ausnehmung (28) aufweist, die in seiner Innenseite zum Aufnehmen der Rippe (27) definiert ist.

## Revendications

1. Appareil pour monter une potence de guidon (30) sur un tube de direction (10), l'appareil comprenant un manchon à friction (20 ; 25) placé autour du tube de direction (10), et un connecteur à compression (31) formé sur la potence de guidon (30) et placé autour du manchon à friction (20 ; 25) **caractérisé par**
une moulure (27) s'étendant verticalement sur le côté extérieur du manchon à friction (20 ; 25),
une gorge (33) s'étendant verticalement sur le côté intérieur du connecteur à compression (31) pour recevoir une moulure (27) et,
une virole (22 ; 26) placée autour du manchon à friction (20 ; 25) maintenant ainsi avec serrage le manchon à friction (20 ; 25) sur le tube de direction (10).

2. Appareil selon la revendication 1, incluant un boulon fileté (24) dans lequel la virole (22 ; 26) inclut deux saillies définissant chacune un taraudage (23) dans lequel est vissé le boulon fileté (24).

3. Appareil selon la revendication 1, dans lequel la virole (22) est formée sur le côté extérieur du manchon à friction (20).

4. Appareil selon la revendication 1, dans lequel la virole (26) est séparée du manchon à friction (25).

5. Appareil selon la revendication 4, dans lequel la virole (26) inclut un évidement (28) ménagé dans le côté intérieur de ladite virole pour recevoir la moulure (27).
